# EUROPEAN PATENT APPLICATION

(11) **EP 4 458 463 A1**
(43) Date of publication of application: **06.11.2024**
(21) Application number: 22915431.5
(22) Date of filing: 24.08.2022
(51) Int. Cl.: B01J 27/24, B01J 31/28, B01J 37/04, B01J 37/08, C01B 13/02, C25B 1/04, C25B 9/00, C25B 11/052, C25B 11/075, H01M 4/86, H01M 4/88, H01M 4/90

(54) **CATALYST AND METHOD FOR PRODUCING THE SAME, CATALYST-CONTAINING ELECTRODE FOR METAL-AIR SECONDARY BATTERY OR FOR WATER ELECTROLYSIS SYSTEM, AND METAL-AIR SECONDARY BATTERY OR WATER ELECTROLYSIS SYSTEM INCLUDING AN ELECTRODE**

(30) Priority: 28.12.2021 JP 2021213781
(71) Applicant: Azul Energy Inc., Sendai-shi, Miyagi 980-0811 (JP)
(72) Inventor: ITO, Koju, Sendai-shi, Miyagi 980-0811 (JP); YABU, Hiroshi, Sendai-shi, Miyagi 980-0811 (JP)
(74) Representative: Schnappauf, Georg
(86) International application number: PCT/JP2022/031795
(87) International publication number: WO 2023/127196

(57) **Abstract**

Provided is a catalyst excellent in both oxygen reduction catalytic performance and oxygen evolution catalytic performance and making effective use of biomass, a manufacturing method thereof, an electrode for a metal-air secondary battery or a water electrolysis system containing the catalyst, and a metal-air secondary battery or a water electrolysis system containing the electrode.

Provided is a catalyst containing a calcined product of a mixture including biomass-derived cellulose nanofibers and a dry matter containing proteins or amino acids, a manufacturing method thereof, an electrode for a metal-air secondary battery or an electrode for a water electrolysis system containing the catalyst, and a metal-air secondary battery or a water electrolysis system containing the electrode.

## Description

### [Technical Field]

The present invention relates to a catalyst and a manufacturing method thereof, an electrode for a metal-air secondary battery or an electrode for a water electrolysis system containing the catalyst, and a metal-air secondary battery or a water electrolysis system containing the electrode.

### [Background Art]

Among metal-air batteries having a high energy density by using oxygen present in the air as a positive electrode active material and a metal as a negative electrode active material, one that can be charged and discharged in a reversible manner is called a metal-air secondary battery and is known to have an energy density several to ten times higher than that of a lithium-ion battery. In a positive electrode (air electrode) of the battery, a reduction reaction of oxygen occurs during discharge, and a catalyst is used to promote the reduction reaction. A carbon material supporting a rare metal such as platinum is known as a typical oxygen reduction catalyst. On the other hand, a reverse reaction of an oxygen evolution reaction occurs in the air electrode during charging, and a rare metal such as iridium oxide or ruthenium oxide is generally used as a catalyst for promoting the oxygen evolution reaction.

However, since rare metals such as platinum, iridium, and ruthenium are expensive and an amount of resources thereof is limited, development of electrode catalysts using a material that is lower in cost and has abundant resources without using such rare metals is a problem.

Also, in the air electrode of the metal-air secondary battery, a catalyst having an activity in both oxygen reduction reaction and oxygen evolution reaction is required, but platinum has a problem that it has a low catalytic activity in the oxygen evolution reaction while exhibiting excellent catalytic performance in the oxygen reduction reaction. In contrast, iridium, ruthenium, and the like have a problem that they have a low catalytic activity in the oxygen reduction reaction while exhibiting high catalytic performance in the oxygen evolution reaction. Therefore, there has been a demand for a dual catalyst having an excellent activity in both the oxygen evolution reaction and the oxygen reduction reaction.

One of promising positive electrode catalyst materials that does not use a rare metal such as platinum is a metal-containing carbon material having an MN₄ structure in which four nitrogen atoms (N) are coordinated on a plane around a central metal (M) of graphene or carbon nanotubes doped with nitrogen. For example, Patent Document 1 describes that an oxygen reduction electrode catalyst as an alternative to platinum has been manufactured by thermally decomposing a metal complex and a carbon material having an MN₄ structure. However, the technology described in Patent Document 1 requires a process of synthesizing a metal complex having the MN₄ structure as a raw material.

On the other hand, in recent years, as environmental problems have become more serious, realization of a resource circulation-type society has become an important issue. Therefore, as a positive electrode catalyst material as an alternative to a rare metal such as platinum, a material that makes effective use of biomass has attracted attention. For example, Patent Document 2 discloses manufacture of an oxygen reduction catalyst using a metal-containing organic natural product such as hemoglobin as a raw material. Also, Patent Document 3 describes that an oxygen reduction electrode can be manufactured by adding a conductive material such as carbon black to a metal-containing carbon material having a FeN₄ structure using a metal-containing organic natural product as a raw material. Also, Patent Documents 2 and 3 also describe that blood meal obtained from blood waste can also be used as a raw material containing a metal-containing natural product.

However, performance of the positive electrode catalyst material as the oxygen reduction catalyst in the technologies described in Patent Documents 2 and 3 is still insufficient and has room for improvement. Also, in order to be utilized as a metal-air secondary battery, it is important to have oxygen evolution catalytic performance in addition to oxygen reduction catalytic performance. Further, in order to achieve more perfect resource circulation, in addition to not using a rare metal, also for carbon materials, it is desirable to use biomass-derived carbon materials instead of expensive nanocarbons such as graphene and carbon nanotubes. Therefore, there is a demand to develop a catalyst having better catalytic performance while making effective use of biomass.

### [Citation List]

### [Patent Document]

[Patent Document 1]
   Japanese Unexamined Patent Application, First Publication No. 2018-183743
[Patent Document 2]
   Japanese Patent No. 4555897
[Patent Document 3]
   Japanese Patent No. 6178968

### [Summary of Invention]

### [Technical Problem]

The present invention has been made to solve the above-described problems of conventional technologies, and an objective thereof is to provide a high-performance catalyst using biomass as an alternative to rare metals such as platinum, iridium, and ruthenium, a manufacturing method thereof, an electrode for a metal-air secondary battery or an electrode for a water electrolysis system containing the catalyst, and a metal-air secondary battery or a water electrolysis system containing the electrode.

### [Solution to Problem]

As a result of intensive studies on the above-described problems, the present inventors have unexpectedly found that, when a catalyst contains a calcined product of a mixture including biomass-derived cellulose nanofibers and a dry matter containing proteins or amino acids, the catalyst is excellent not only in both oxygen reduction catalytic performance and oxygen evolution catalytic performance but also in hydrogen evolution catalytic performance, and has a catalytic performance comparable to a carbon catalyst using a rare metal such as platinum, iridium, and ruthenium, and thus have reached the present invention.

Also, as a result of intensive studies on the above-described problems, the present inventors have unexpectedly found that, when the catalyst contains a calcined product of a mixture in which a cobalt complex is further included in addition to the biomass-derived cellulose nanofibers and the dry matter containing proteins or amino acids, the catalyst is significantly improved in oxygen evolution catalytic performance, is excellent in both oxygen reduction catalytic performance and oxygen evolution catalytic performance, and furthermore, is also excellent in hydrogen evolution catalytic performance, and thus have reached the present invention.

An objective of the present invention is achieved by a catalyst containing a calcined product of a mixture including biomass-derived cellulose nanofibers and a dry matter containing proteins or amino acids.

The cellulose nanofibers are preferably derived from marine biomass.

The cellulose nanofibers are preferably derived from sea squirt shells or seaweed.

The dry matter containing proteins or amino acids is preferably a dry matter of blood waste having a FeN₄ structure.

The catalyst preferably contains 0.1 to 30% by mass of iron with respect to a total mass of the catalyst.

The catalyst preferably contains 0.1 to 40% by mass of phosphorus with respect to a total mass of the catalyst.

A mass ratio of the dry matter containing proteins or amino acids and the cellulose nanofibers included in the mixture is preferably 1:1 to 20:1.

The mixture preferably further contains a cobalt complex.

The cobalt complex is preferably vitamin B₁₂s.

The vitamin B₁₂s are preferably derived from biomass.

The vitamin B₁₂s are preferably derived from laver and/or oysters.

The catalyst preferably contains 0.1 to 30% by mass of cobalt with respect to a total mass of the catalyst.

A mass ratio of the cellulose nanofibers, the dry matter containing proteins or amino acids, and the cobalt complex (cellulose nanofibers:dry matter containing proteins or amino acids:cobalt complex) included in the mixture is preferably 1:1 to 20:0.1 to 10.

The catalyst is preferably for oxygen evolution, oxygen reduction, or hydrogen evolution.

The present invention also relates to a manufacturing method, which is a manufacturing method of a catalyst containing a calcined product of a mixture including biomass-derived cellulose nanofibers and a dry matter containing proteins or amino acids, and the manufacturing method includes a step of preparing and calcining the mixture including the dry matter containing proteins or amino acids and the cellulose nanofibers.

The mixture preferably further contains a cobalt complex.

The manufacturing method preferably includes a step of extracting the cellulose nanofibers from biomass.

The manufacturing method preferably includes a step of obtaining a dry matter of blood waste by concentrating and drying the blood waste.

The present invention also relates to an electrode for a metal-air secondary battery or a water electrolysis system containing the catalyst of the present invention.

The present invention also relates to a metal-air secondary battery or a water electrolysis system including the electrode of the present invention.

As aspects of the present invention, the following are exemplified.

### (Aspect 1)

A catalyst containing a calcined product of a mixture including biomass-derived cellulose nanofibers and a dry matter containing proteins or amino acids.

### (Aspect 2)

The catalyst according to aspect 1, in which the cellulose nanofibers are derived from marine biomass.

### (Aspect 3)

The catalyst according to aspect 1 or 2, in which the cellulose nanofibers are derived from sea squirt shells or seaweed.

### (Aspect 4)

The catalyst according to any one of aspects 1 to 3, in which the dry matter containing proteins or amino acids is a dry matter of blood waste having a FeN₄ structure.

### (Aspect 5)

The catalyst according to any one of aspects 1 to 4, containing 0.1 to 30% by mass of iron with respect to a total mass of the catalyst.

### (Aspect 6)

The catalyst according to any one of aspects 1 to 5, containing 0.1 to 40% by mass of phosphorus with respect to a total mass of the catalyst.

### (Aspect 7)

The catalyst according to any one of aspects 1 to 6, in which a mass ratio of the dry matter containing proteins or amino acids and the cellulose nanofibers included in the mixture is 1: 1 to 20: 1.

### (Aspect 8)

The catalyst according to any one of aspects 1 to 7, in which the mixture further includes a cobalt complex.

### (Aspect 9)

The catalyst according to aspect 8, in which the cobalt complex is vitamin B₁₂s.

### (Aspect 10)

The catalyst according to aspect 9, in which the vitamin B₁₂s are derived from biomass.

### (Aspect 11)

The catalyst according to aspect 9 or 10, in which the vitamin B₁₂s are derived from laver and/or oysters.

### (Aspect 12)

The catalyst according to any one of aspects 8 to 11, containing 0.1 to 30% by mass of cobalt with respect to a total mass of the catalyst.

### (Aspect 13)

The catalyst according to any one of aspects 8 to 12, in which a mass ratio of the cellulose nanofibers, the dry matter containing proteins or amino acids, and the cobalt complex included (cellulose nanofibers:dry matter containing proteins or amino acids:cobalt complex) in the mixture is 1:1 to 20:0.1 to 10.

### (Aspect 14)

The catalyst according to any one of aspects 1 to 13 for oxygen evolution, oxygen reduction, or hydrogen evolution.

### (Aspect 15)

A manufacturing method, which is a manufacturing method of a catalyst containing a calcined product of a mixture including biomass-derived cellulose nanofibers and a dry matter containing proteins or amino acids, the manufacturing method including a step of preparing and calcining the mixture including the biomass-derived cellulose nanofibers and the dry matter containing proteins or amino acids.

### (Aspect 16)

The manufacturing method according to aspect 15, in which the mixture further includes a cobalt complex.

### (Aspect 17)

The manufacturing method according to aspect 15 or 16, including a step of extracting the cellulose nanofibers from biomass.

### (Aspect 18)

The manufacturing method according to any one of aspects 15 to 17, including a step of obtaining the dry matter containing proteins or amino acids by concentrating and drying blood waste.

### (Aspect 19)

The manufacturing method according to any one of aspects 15 to 18, in which the cellulose nanofibers are derived from marine biomass.

### (Aspect 20)

The manufacturing method according to any one of aspects 15 to 19, in which the cellulose nanofibers are derived from sea squirt shells or seaweed.

### (Aspect 21)

The manufacturing method according to any one of aspects 16 to 20, in which the cobalt complex is vitamin B₁₂s.

### (Aspect 22)

The manufacturing method according to aspect 21, in which the vitamin B₁₂s are derived from biomass.

### (Aspect 23)

The manufacturing method according to aspect 21 or 22, in which the vitamin B₁₂s are derived from laver and/or oysters.

### (Aspect 24)

An electrode for a metal-air secondary battery or a water electrolysis system containing the catalyst according to any one of aspects 1 to 14.

### (Aspect 25)

A metal-air secondary battery or a water electrolysis system including the electrode according to aspect 24.

### [Advantageous Effects of Invention]

According to the present invention, it is possible to provide a catalyst having excellent catalytic performance in both oxygen reduction catalytic performance and oxygen evolution catalytic performance, further having excellent catalytic performance in hydrogen evolution catalytic performance, and making effective use of biomass.

### [Brief Description of Drawings]

FIG. 1 is a graph showing a result of an evaluation test of oxygen reduction catalytic performance and oxygen evolution catalytic performance for a catalyst containing a calcined product of a mixture including biomass-derived cellulose nanofibers, a dry matter containing proteins or amino acids, and a cobalt complex.
FIG. 2 is a graph showing a result of an evaluation test of hydrogen evolution catalytic performance for the catalyst containing the calcined product of the mixture including the biomass-derived cellulose nanofibers, the dry matter containing proteins or amino acids, and the cobalt complex.
FIG. 3 is a graph showing a result of an I-V characteristics evaluation test for the catalyst containing the calcined product of the mixture including the biomass-derived cellulose nanofibers, the dry matter containing proteins or amino acids, and the cobalt complex.

### [Description of Embodiments]

### [Catalyst]

A catalyst of the present invention contains a calcined product of a mixture including biomass-derived cellulose nanofibers and a dry matter containing proteins or amino acids. When the catalyst of the present invention contains the calcined product of the mixture including biomass-derived cellulose nanofibers and a dry matter containing proteins or amino acids, a catalyst to which both catalytic abilities of excellent oxygen reduction and oxygen evolution, and furthermore, catalytic performance of hydrogen evolution are imparted can be obtained.

### [Biomass-derived cellulose nanofibers]

The cellulose nanofibers of the present invention are obtained from biomass. Preferably, the cellulose nanofibers are not derived from wood. More preferably, the cellulose nanofibers are derived from marine biomass. Still more preferably, the cellulose nanofibers are derived from urochordates or seaweed.

In a preferred embodiment, the cellulose nanofibers of the present invention are derived from urochordates. In a more preferred embodiment, the cellulose nanofibers of the present invention are derived from sea squirt shells. Sea squirts are known as the only animal capable of producing cellulose. On the other hand, sea squirt shells, which are non-edible parts, become a large amount of industrial waste. Therefore, when the cellulose nanofibers of the present invention are derived from sea squirt shells, a catalyst that makes more effective use of waste biomass can be manufactured. Also, cellulose derived from sea squirt shells has a higher tensile strength and excellent crystallinity compared with cellulose derived from wood. Therefore, when the cellulose nanofibers of the present invention are derived from sea squirt shells, a highly conductive carbon material can be obtained by calcination.

In one embodiment, the cellulose nanofibers of the present invention are derived from seaweed. Seaweed includes, for example, wakame, kelp, agar, and sea lettuce. Among these, the cellulose nanofibers are preferably derived from wakame, and more preferably derived from a core stem part of wakame.

The cellulose nanofibers of the present invention may be one in which one or more types of cellulose nanofibers are combined. For the cellulose nanofibers of the present invention, only cellulose nanofibers derived from sea squirt shells may be used. Also, for the cellulose nanofibers of the present invention, only seaweed-derived cellulose nanofibers may be used. For the cellulose nanofibers of the present invention, sea squirt shell-derived cellulose nanofibers and seaweed-derived cellulose nanofibers may be used in combination. In one embodiment, it is preferable to use only cellulose nanofibers derived from sea squirt shells for the cellulose nanofibers of the present invention.

The cellulose nanofibers of the present invention preferably have a diameter of less than 200 nm, more preferably less than 100 nm, and still more preferably less than 50 nm. When the diameter of the cellulose nanofibers is less than the above-described upper limit value, a specific surface area increases and high conductivity can be obtained. In one embodiment, since the cellulose nanofibers of the present invention are derived from sea squirt shells, a diameter of the fibers is smaller than that of wood-derived cellulose nanofibers. Therefore, since a surface area of the cellulose nanofibers is increased, a carbon material having a higher catalytic activity can be obtained.

The cellulose nanofibers of the present invention preferably have a fiber length larger than 4 µm, more preferably larger than 4.5 µm, and still more preferably larger than 5 µm. When a fiber length of the cellulose nanofibers is larger than the above-described upper limit value, the cellulose nanofibers can have an excellent tensile strength.

The cellulose nanofibers of the present invention preferably have a crystal size of 7 to 14 nm, more preferably 8 to 12 nm, and still more preferably 8.5 to 11.5 nm. In one embodiment, since the cellulose nanofibers are derived from marine biomass, the cellulose nanofibers can have a higher crystallinity than wood-derived cellulose nanofibers.

The cellulose nanofibers of the present invention preferably have a tensile strength of 2.5 to 7.5 GPa, more preferably 2.8 to 7.0 GPa, and still more preferably 3.0 to 6.4 GPa. In one embodiment, since the cellulose nanofibers are derived from marine biomass, the cellulose nanofibers can have a higher tensile strength than wood-derived cellulose nanofibers.

The cellulose nanofibers of the present invention preferably have a degree of crystallinity of 80% or higher, more preferably 90% or higher, and still more preferably 95% or higher. In one embodiment, since the cellulose nanofibers are derived from marine biomass, the cellulose nanofibers can have a higher degree of crystallinity than wood-derived cellulose nanofibers.

### [Dry matter containing proteins or amino acids]

Examples of the dry matter of the present invention containing proteins or amino acids include dry matters derived from raw materials derived from, for example, meat, seafood, beans, milk, yeast, and the like. Preferably, the dry matter of the present invention containing proteins or amino acids is of an animal origin or a plant origin. In one embodiment, the dry matter of the present invention containing proteins or amino acids is preferably derived from waste, and more preferably animal waste, plant waste, or a mixture of animal waste and plant waste. In one embodiment, the dry matter of the present invention containing proteins or amino acids is most preferably derived from blood waste.

In one embodiment, the proteins or amino acids of the present invention can include a metal. When the proteins or amino acids include a metal, types of the metal include iron, copper, manganese, cobalt, nickel, vanadium, and the like. In one embodiment, the proteins or amino acids of the present invention include iron. In one embodiment, the dry matter of the present invention containing proteins or amino acids is a dry matter of blood waste having a FeN₄ structure.

For the dry matter of the blood waste having the FeN₄ structure, for example, blood waste produced in meat processing plants, seafood processing plants, or the like can be used. As the blood waste, preferably, dried blood meal obtained by drying waste blood produced in meat processing plants can be used. As the blood waste, dried blood meal obtained by drying waste blood derived from, for example, pigs, poultry, rabbits, sheep, cows, or the like may be used. Dried blood meal obtained by drying waste blood derived from cows or pigs is preferably used.

The dry matter of the blood waste having the FeN₄ structure may contain a metal-containing organic compound having the FeN₄ structure. Iron protein is preferable as the metal-containing organic compound having the FeN₄ structure. Examples of the iron protein include hemoglobin, catalase, peroxidase, cytochrome, and the like. Among these, the iron protein is preferably hemoglobin.

When the dry matter of the blood waste having the FeN₄ structure contains iron protein, an iron protein content is preferably 80% by mass or more, more preferably 90% by mass or more, and still more preferably 95% by mass or more with respect to a total amount of the dry matter of blood waste. When the iron protein content is the above-described lower limit value or more, a FeN₄ structure source with respect to a total amount of the catalyst is abundant, and performance of the catalyst is further improved.

The dry matter of the blood waste having the FeN₄ structure may further contain, in addition to the iron protein, one or more selected from lysine, a sulfur-containing amino acid, and a protein other than the iron protein. As the protein other than the iron protein, although not particularly limited, for example, a copper protein can be mentioned. As the copper protein, for example, bilirubin oxidase, tyrosinase, laccase, and the like can be mentioned.

The dry matter of blood waste with FeN₄ structure may further contain water and fat. The dry matter of the blood waste having the FeN₄ structure preferably contains water in an amount of less than 12% by mass, more preferably less than 10% by mass, and still more preferably less than 8% by mass. When the dry matter of the blood waste having the FeN₄ structure contains water less than the above-described upper limit value, performance of the catalyst is further improved. Also, the dry matter of the blood waste having the FeN₄ structure preferably contains fat in an amount of less than 5% by mass, more preferably less than 2% by mass, and still more preferably less than 1% by mass. When the dry matter of the blood waste having the FeN₄ structure contains fat in an amount less than the above-described upper limit value, performance of the catalyst is further improved.

### [Calcined product of mixture including biomass-derived cellulose nanofibers and dry matter containing proteins or amino acids]

The calcined product of the mixture including the biomass-derived cellulose nanofibers and the dry matter of the present invention containing the proteins or amino acids is obtained by preparing a mixture including the biomass-derived cellulose nanofibers of the present invention and the dry matter of the present invention containing proteins or amino acids, and calcining the obtained mixture.

The catalyst of the present invention may contain an additional component in addition to the calcined product of the mixture including the biomass-derived cellulose nanofibers and the dry matter containing proteins or amino acids. The additional component preferably includes a solvent. The solvent may be a solvent that easily dissolves the catalyst (that is, has a high solubility) or a solvent that does not easily dissolve the catalyst (that is, has a low solubility).

The solvent is not particularly limited, and may be an inorganic solvent such as water or may be an organic solvent. Specific examples of the organic solvent include alcohols such as methanol, ethanol, propanol, isopropanol(2-propanol), and 1-hexanol, aprotic polar solvents such as dimethylsulfoxide; tetrahydrofuran; N-methylpyrrolidone, dimethylformamide, and acetone, and nonpolar solvents such as chloroform, dichloromethane, 1,4-dioxane, benzene, and toluene. One type of the solvent may be used alone, or two or more types of the solvent may be used together.

The catalyst of the present invention is preferably a catalyst for oxygen evolution, and a catalyst for oxygen reduction or hydrogen evolution. In one embodiment, the catalyst of the present invention has properties of oxygen evolution catalytic performance, oxygen reduction catalytic performance, and hydrogen evolution catalytic performance. Therefore, in one embodiment, the catalyst of the present invention is a catalyst for oxygen evolution, a catalyst for oxygen reduction, and a catalyst for hydrogen evolution.

The catalyst of the present invention is preferably a catalyst for oxygen evolution or oxygen reduction in a positive electrode of a battery. The catalyst of the present invention is more preferably a catalyst for oxygen evolution or oxygen reduction in a positive electrode (air electrode) of a metal-air secondary battery. Alternatively, the catalyst of the present invention is preferably a catalyst for oxygen evolution in a water electrolysis system. The catalyst of the present invention is more preferably a catalyst for oxygen evolution in an anode of a water electrolysis system.

Also, preferably, the catalyst of the present invention can also be used as a catalyst for hydrogen evolution in a water electrolysis system. More preferably, the catalyst of the present invention can also be used as a catalyst for hydrogen evolution in a cathode of a water electrolysis system.

The catalyst of the present invention preferably contains iron in an amount of 0.1 to 30% by mass, more preferably 0.2 to 10% by mass, and still more preferably 0.5 to 10% by mass with respect to a total mass of the catalyst. When the catalyst of the present invention contains iron within the above-described range, the catalyst can have a higher catalytic activity.

The catalyst of the present invention preferably contains phosphorus in an amount of 0.1 to 40% by mass, more preferably 0.2 to 20% by mass, and still more preferably 0.5 to 10% by mass with respect to the total mass of the catalyst. When the catalyst of the present invention contains phosphorus within the above-described range, the catalyst can have a higher catalytic activity.

The catalyst of the present invention preferably contains nitrogen in an amount of 0.1 to 40% by mass, more preferably 0.2 to 20% by mass, and still more preferably 0.5 to 10% by mass with respect to the total mass of the catalyst. When the catalyst of the present invention contains nitrogen within the above-described range, the catalyst can have a higher catalytic activity.

In the catalyst of the present invention, a mass ratio of the dry matter containing proteins or amino acids and the cellulose nanofibers included in the mixture is preferably 0.1: 1 to 50:1, more preferably 1: 1 to 30: 1, and still more preferably 1:1 to 20:1. When the mass ratio of the dry matter of the present invention containing the proteins or amino acids and the cellulose nanofibers is within the above-described range, a higher conductivity and catalytic activity can be obtained. When the dry matter of the present invention containing the proteins or amino acids includes a dry matter of blood waste, a mass ratio of the dry matter of blood waste and the cellulose nanofibers included in the mixture of the present invention is preferably 0.1: 1 to 50: 1, more preferably 1:1 to 30: 1, and still more preferably 1:1 to 20:1. When the mass ratio of the dry matter of blood waste of the present invention and the cellulose nanofibers is within the above-described range, a higher conductivity and catalytic activity can be obtained.

An oxygen evolution (OER) catalyst of the present invention preferably has an onset potential E_{on-set/OER} of 1.5 V [vs RHE] or lower, more preferably 1.45 V [vs RHE] or lower, and still more preferably 1.4 V [vs RHE] or lower. When the oxygen evolution catalyst of the present invention has the onset potential equal to or lower than the above-described upper limit value, the oxygen evolution catalyst can have an oxygen evolution (OER) catalytic activity comparable to that of a rare metal such as iridium.

The oxygen evolution catalyst of the present invention has a potential E_{j-10(OER)} when a current density thereof reaches 10 mA/cm², and E_{j-10(OER)} is preferably 2.0 V [vs RHE] or lower, more preferably 1.9 V [vs RHE] or lower, and still more preferably 1.8 V [vs RHE] or lower. When the oxygen evolution catalyst of the present invention has E_{j- 10(OER)} equal to or higher than the above-described upper limit value, the oxygen evolution catalyst can have an oxygen evolution catalytic activity comparable to that of a rare metal such as iridium.

An oxygen reduction (ORR) catalyst of the present invention preferably has an onset potential E_{on-set/ORR} of 0.8 V [vs RHE] or higher, more preferably 0.9 V [vs RHE] or higher, still more preferably 0.98 V [vs RHE] or higher, and particularly preferably 1.0 V [vs RHE] or higher. When the oxygen reduction catalyst of the present invention has the onset potential equal to or higher than the above-described lower limit value, the oxygen reduction catalyst can have an oxygen reduction catalytic activity comparable to that of a rare metal such as platinum.

The oxygen reduction catalyst of the present invention preferably has a half-wave potential E_{half(ORR)} of 0.75 V [vs RHE] or higher, more preferably 0.80 V [vs RHE] or higher, still more preferably 0.82 V [vs RHE] or higher, and particularly preferably 0.85 V [vs RHE]. When the oxygen reduction catalyst of the present invention has the half-wave potential equal to or higher than the above-described lower limit value, the oxygen reduction catalyst can have an oxygen reduction catalytic activity comparable to that of a rare metal such as platinum.

### [Catalyst containing calcined product of biomass-derived cellulose nanofibers, dry matter containing proteins or amino acids, and cobalt complex]

In one embodiment, a mixture prepared to obtain the calcined product to be contained in the catalyst of the present invention contains a cobalt complex in addition to the biomass-derived cellulose nanofibers and the dry matter containing proteins or amino acids. When the catalyst of the present invention contains the calcined product of the mixture including the biomass-derived cellulose nanofibers, the dry matter containing proteins or amino acids, and the cobalt complex, it is possible to obtain a catalyst in which an activity of oxygen evolution reaction is significantly improved, both oxygen reduction catalytic performance and oxygen evolution catalytic performance are excellent, and hydrogen evolution catalytic performance is further improved.

### [Cobalt complex]

In one embodiment, the cobalt complex of the present invention is vitamin B₁₂s. Vitamin B₁₂s refers to vitamin B₁₂ (cyanocobalamin), derivatives thereof, and salts thereof. As the derivatives of vitamin B₁₂, a compound in which a ligand on cobalt in cyanocobalamin is substituted, a compound in which a functional group in cyanocobalamin is substituted, and the like can be mentioned, and more specifically methylcobalamin, hydroxocobalamin, adenosylcobalamin, aquacobalamin, and the like can be mentioned. Also, examples of vitamin B₁₂ and derivatives thereof include carboxylate salts such as acetate, trifluoroacetate, butyrate, palmitate, stearate, fumarate, maleate, succinate, malonate, lactate, tartrate, and citrate, organic sulfonates such as methanesulfonate, toluenesulfonate, and tosylate, inorganic acid salts such as hydrochlorides, sulfates, nitrates, and phosphates, organic amine salts such as methylamine, triethylamine, and triethanolamine, alkali metal salts such as sodium salts and potassium salts, alkaline earth metal salts such as calcium and magnesium, ammonium salts, and the like. One type of the vitamin B₁₂s may be used alone, or two or more types thereof may be used in combination. Preferably, the cobalt complex of the present invention is vitamin B₁₂ (cyanocobalamin).

In one embodiment, the vitamin B₁₂s of the present invention are derived from biomass. When the biomass-derived vitamin B₁₂s are used, it is possible to manufacture a catalyst that makes more effective use of biomass. As the biomass-derived vitamin B₁₂s, vitamin B₁₂s derived from, for example, seafood, seaweed, or meat can be mentioned. More preferably, the vitamin B₁₂s of the present invention are derived from seafood and/or seaweed. As the seafood, for example, oysters, freshwater clams, salmon roe, saury, and herring can be mentioned. As the seaweed, for example, laver, wakame, kelp, agar, and sea lettuce can be mentioned. Among these, the vitamin B₁₂s of the present invention are preferably derived from oysters and/or laver. As the vitamin B₁₂s of the present invention, only oyster-derived vitamin B₁₂s may be used, only laver-derived vitamin B₁₂s may be used, and oyster-derived vitamin B₁₂s and laver-derived vitamin B₁₂s may be used in combination. When oyster-derived and/or laver-derived vitamin B 12s are used as the vitamin B₁₂s of the present invention, it is possible to obtain a catalyst in which an activity of oxygen evolution reaction is further improved, both oxygen reduction catalytic performance and oxygen evolution catalytic performance are excellent, and hydrogen evolution catalytic performance is further improved. Preferably, the cobalt complex of the present invention is the oyster-derived and/or laver-derived vitamin B₁₂ (cyanocobalamin).

In one embodiment, the catalyst of the present invention preferably contains cobalt in an amount of 0.1 to 30% by mass, more preferably 0.1 to 20% by mass, and still more preferably 0.5 to 10% by mass with respect to the total mass of the catalyst. When the catalyst of the present invention contains cobalt within the above-described range, the catalyst can have higher oxygen evolution catalytic performance and higher hydrogen evolution catalytic performance.

In one embodiment, a mass ratio of the cellulose nanofibers, the dry matter containing proteins or amino acids, and the cobalt complex (cellulose nanofibers:dry matter containing proteins or amino acids:cobalt complex) included in the mixture for the calcined product contained in the catalyst of the present invention is preferably 1:1 to 20:0.1 to 10, more preferably 1:1 to 15:0.1 to 5, and still more preferably 1:1 to 12:0.5 to 3. When the mass ratio of the cellulose nanofibers of the present invention, the dry matter containing proteins or amino acids, and the cobalt complex is within the above-described range, a higher conductivity and catalytic activity can be obtained.

In one embodiment, if the catalyst of the present invention contains the calcined product of the mixture including the biomass-derived cellulose nanofibers, the dry matter containing proteins or amino acids, and the cobalt complex, the oxygen evolution (OER) catalyst of the present invention has the potential E_{j-10(OER)} when a current density thereof reaches 10 mA/cm², and E_{j-10(OER)} is preferably 1.8 V [vs RHE] or lower, more preferably 1.75 V [vs RHE] or lower, and still more preferably 1.73 V [vs RHE] or lower. When the catalyst has E_{j-10(OER)} equal to or higher than the above-described upper limit value, the catalyst can have an oxygen evolution catalytic activity comparable to that of a rare metal such as iridium.

The hydrogen evolution (HER) catalyst of the present invention preferably has an onset potential E_{on-set/HER} of -0.7V [vs RHE] or more, more preferably -0.5V [vs RHE] or more, still more preferably -0.4V [vs RHE] or more, and particularly preferably -0.3 V [vs RHE] or more. When the hydrogen evolution catalyst of the present invention has the onset potential equal to or higher than the above-described lower limit value, the hydrogen evolution catalyst can have a hydrogen catalytic activity comparable to that of a rare metal such as platinum.

### [Manufacturing method of catalyst]

In one embodiment, the present invention relates to a manufacturing method of the catalyst of the present invention. The manufacturing method of the catalyst includes a step of preparing and calcining a mixture including a dry matter containing proteins or amino acids and biomass-derived cellulose nanofibers.

In order to manufacture the catalyst of the present invention, for example, a mixture including a dry matter containing proteins or amino acids and biomass-derived cellulose nanofibers as a carbon source can be prepared, and then the mixture can be heat-treated and carbonized at a predetermined temperature in an inert atmosphere such as nitrogen or helium. A heat treatment temperature thereof is not particularly limited as long as it is a temperature at which carbonization is possible, and a preferable temperature is 350 to 1600°C, a more preferable temperature is 500 to 1200°C, a still more preferable temperature is 600 to 1000°C, and a particularly preferable temperature is 750 to 950°C (in the vicinity of 900°C). Also, a time required for the heat treatment is not particularly limited as long as it is a time during which carbonization is possible, and is preferably 30 minutes to 6 hours, more preferably 1 to 5 hours, and still more preferably 1 to 3 hours. Next, when the obtained carbide is finely pulverized with, for example, a ball mill or the like, it is possible to obtain a calcined product of the mixture including the dry matter containing proteins or amino acids and the biomass-derived cellulose nanofibers. In one embodiment, as the dry matter containing proteins or amino acids, a dry matter of blood waste can be used as a nitrogen-iron complex source.

Preferably, the manufacturing method of the catalyst of the present invention further includes a step of extracting cellulose nanofibers from biomass. In the manufacturing method of the catalyst of the present invention, the cellulose nanofibers are preferably not derived from wood. In the manufacturing method of the catalyst of the present invention, the cellulose nanofibers are more preferably derived from marine biomass. In the manufacturing method of the catalyst of the present invention, the cellulose nanofibers are still more preferably derived from urochordates or seaweed. In the manufacturing method of the catalyst of the present invention, the cellulose nanofibers are preferably derived from sea squirt shells or seaweed, and particularly preferably derived from sea squirt shells. When the cellulose nanofibers of the present invention are derived from sea squirt shells, the cellulose nanofibers can be easily decomposed compared to a case in which wood-derived cellulose containing a large amount of lignin is used, and energies and costs required for manufacture can be reduced.

A method of extracting cellulose nanofibers from biomass is arbitrary. When the cellulose nanofibers are derived from sea squirt shells, a method of extracting the cellulose nanofibers may include, for example, a step of treating sea squirt shells with an alkaline solution to decompose proteins and extract cellulose. The alkaline solution is not particularly limited, and 10% of potassium hydroxide solution and sodium hydroxide solution can be mentioned. When the cellulose nanofibers are derived from seaweed such as wakame, a step of removing alginic acid by centrifugal separation or the like may be included. Next, the method of extracting cellulose from biomass may include a step of crushing the obtained cellulose to a nano size.

When a dry matter of blood waste is used as the dry matter of the present invention containing proteins or amino acids, preferably, the manufacturing method of the catalyst of the present invention further includes a step of obtaining the dry matter of blood waste by concentrating and drying blood waste. A method of concentrating and drying blood waste is arbitrary. For example, it is possible to obtain a dry matter of blood waste by concentrating blood obtained from meat and removing moisture by low-temperature vacuum drying. In one embodiment, the manufacturing method of the catalyst of the present invention does not need to remove components other than iron protein from blood waste. If the manufacturing method of the catalyst of the present invention does not include a step of removing components other than iron protein from blood waste, manufacture of the catalyst becomes simpler and manufacturing costs can be reduced.

In one embodiment, if the catalyst of the present invention contains the calcined product of the mixture including the biomass-derived cellulose nanofibers, the dry matter containing proteins or amino acids, and the cobalt complex, the manufacturing method of the catalyst of the present invention includes a step of preparing and calcining the mixture including the biomass-derived cellulose nanofibers, the dry matter containing proteins or amino acids, and the cobalt complex.

In one embodiment, if the catalyst of the present invention contains the calcined product of the mixture including the biomass-derived cellulose nanofibers, the dry matter containing proteins or amino acids, and the cobalt complex, in order to manufacture the catalyst of the present invention, for example, the mixture including the biomass-derived cellulose nanofibers, the dry matter containing proteins or amino acids, and the cobalt complex can be prepared and then can be heat-treated and carbonized at a predetermined temperature in an inert atmosphere such as nitrogen or helium. A heat treatment temperature thereof is not particularly limited as long as it is a temperature at which carbonization is possible, and a preferable temperature is 350 to 1600°C, a more preferable temperature is 500 to 1200°C, a still more preferable temperature is 600 to 1000°C, and a particularly preferable temperature is 750 to 950°C (in the vicinity of 900°C). Also, a time required for the heat treatment is not particularly limited as long as it is a time during which carbonization is possible, and is preferably 30 minutes to 6 hours, more preferably 1 to 5 hours, and still more preferably 1 to 3 hours. Next, when the obtained carbide is finely pulverized with, for example, a ball mill or the like, it is possible to obtain a calcined product of the mixture including the biomass-derived cellulose nanofibers, the dry matter containing proteins or amino acids, and the cobalt complex.

If the catalyst of the present invention contains the calcined product of the mixture including the biomass-derived cellulose nanofibers, the dry matter containing proteins or amino acids, and the cobalt complex, preferably, the manufacturing method of the catalyst of the present invention further includes a step of obtaining the cobalt complex from the biomass. A method of obtaining the cobalt complex from the biomass is arbitrary.

In one embodiment, the cobalt complex of the present invention is vitamin B₁₂s. Preferably, the cobalt complex of the present invention is vitamin B₁₂ (cyanocobalamin).

In one embodiment, the vitamin B₁₂s of the present invention are derived from biomass, the vitamin B₁₂s are preferably derived from seafood and/or seaweed, and the vitamin B₁₂s are more preferably derived from oysters and/or laver. In one embodiment, the manufacturing method of the catalyst of the present invention may include a step of obtaining vitamin B₁₂s such as, for example, a step of obtaining a cobalt complex from biomass by homogenizing biomass raw materials (oysters, laver, and the like) in a food processor and heat-extracting them in an acetate buffer solution containing a potassium cyanide solution.

### [Electrode]

In one embodiment, the present invention relates to an electrode containing the catalyst of the present invention. The electrode can include a layer (that is, catalyst layer) containing the catalyst of the present invention on a base material, and can be used as a catalyst for oxygen evolution reactions or as a catalyst for oxygen reduction reactions. Also, in one embodiment, the electrode can also be used as a catalyst for hydrogen evolution reactions. The catalyst layer may be in direct contact with the base material, or another layer may be present between the base material and the catalyst.

The base material is not particularly limited, and examples thereof include an aluminum foil, an electrolytic aluminum foil, an aluminum mesh (expanded metal), foamed aluminum, perforated aluminum, an aluminum alloy such as duralumin, a copper foil, an electrolytic copper foil, a copper mesh (expanded metal), foamed copper, perforated copper, a copper alloy such as brass, a brass foil, a brass mesh (expanded metal), foamed brass, perforated brass, a nickel foil, a nickel mesh, corrosion-resistant nickel, a nickel mesh (expanded metal), perforated nickel, foamed nickel, sponge nickel, metallic zinc, corrosion-resistant metallic zinc, a zinc foil, a zinc mesh (expanded metal), a steel plate, a punched steel plate, silver, titanium, and the like. Also, it is possible to use substrate-like base materials such as silicon substrates, metal substrates such as gold, iron, stainless steel, copper, aluminum, and lithium, alloy substrates containing any combination of these metals, oxide substrates such as indium tin oxide (ITO), indium zinc oxide (IZO), and antimony tin oxide (ATO), and carbon substrates such as glassy carbon, pyrolytic graphite, and carbon felt, and the like.

Although a manufacturing method of the electrode is not particularly limited, the electrode may be manufactured by, for example, applying the catalyst on a surface of the base material. When components other than the catalyst are removed, drying by heating may be performed, or pressing may be performed after drying. Also, a catalyst layer may be provided on a surface of the base material by vacuum deposition or the like. The electrode may have the catalyst layer only on one surface of the base material, or may have it on both surfaces of the base material.

Although a thickness of the catalyst layer is not particularly limited, the thickness can be, for example, 0.01 to 300 µm. When the thickness is equal to or more than the above-described lower limit value, durability of the electrode is excellent. When the thickness is equal to or less than the above-described upper limit value, performance of the electrode is less likely to deteriorate.

The electrode has a function as an oxygen evolution reaction catalyst or an oxygen reduction reaction catalyst, and has a function as a catalyst for the reduction reactions described below.

(Oxygen evolution reaction) 2H₂O → O₂+4H⁺+4e⁻

(oxygen reduction reaction) O₂+4H⁺+4e⁻ → 2H₂O O₂+2H₂O+4e⁻ → 4OH⁻

### [Metal-air secondary battery]

In one embodiment, the present invention relates to a metal-air secondary battery including the electrode of the present invention. The electrode of the present invention can be used as a positive electrode (air electrode) of the metal-air secondary battery. A metal-air secondary battery can include a positive electrode (air electrode), a negative electrode (metal electrode), an electrolyte, and a separator. In the present invention, the positive electrode (air electrode) is an electrode that uses gaseous oxygen as an electrode active material.

The negative electrode (metal electrode) is not particularly limited, and examples thereof include metal simple substances such as aluminum, magnesium, calcium, lithium, zinc, and iron, and metal oxides thereof.

The electrolyte is preferably an aqueous electrolyte and is not particularly limited, and examples thereof include alkaline aqueous solutions such as potassium hydroxide aqueous solution and sodium hydroxide aqueous solution, neutral aqueous solutions such as sodium chloride and ammonium chloride, and acidic aqueous solutions such as sulfuric acid aqueous solution. One type of the electrolyte may be used alone, or two or more types of the electrolytes may be used together. Also, inorganic solid electrolytes can also be used.

The separator is a member that separates the positive electrode (air electrode) and the negative electrode (metal electrode), holds the electrolyte, and secures an ion conductivity between the positive electrode (air electrode) and the negative electrode (metal electrode). The separator is not particularly limited, and examples thereof include polyethylene, polypropylene, polytetrafluoroethylene, polyvinylidene fluoride, cellulose, cellulose acetate, hydroxyalkylcellulose, carboxymethylcellulose, polyvinyl alcohol, cellophane, polystyrene, polyacrylonitrile, polyacrylamide, polyvinyl chloride, polyimide, polyamide, vinylon, polymers with micropores such as poly(meth)acrylic acid, gel compounds, ion-exchange membranes, cyclized polymers, poly(meth)acrylate-containing polymers, sulfonate-containing polymers, quaternary ammonium salt-containing polymers, quaternary phosphonium salt-containing polymers, and the like. The separator may be either a non-porous membrane or a porous membrane, and in a case of the porous membrane, a pore size is preferably 10 µm or less.

### [Water electrolysis system]

In one embodiment, the catalyst of the present invention has an excellent catalytic activity for an oxygen evolution reaction, and thus is useful as an oxygen evolution catalyst for a water electrolysis system.

Practical water electrolysis systems at present can be broadly divided into two types, one is alkaline water electrolysis in which an alkaline aqueous solution is used as the electrolyte, and another one is solid polymer type water electrolysis (also called PEM electrolysis) in which a proton exchange membrane is used as the electrolyte. In one embodiment, the electrode of the present invention can be used in an alkaline water electrolysis system or a solid polymer type water electrolysis system.

### [Alkaline water electrolysis]

An alkaline water electrolysis system can include, for example, an anode, a cathode, and a diaphragm for alkaline electrolysis disposed between the anode and the cathode.

The anode can include a conductive base material and a catalyst layer covering a surface of the base material. Preferably, the catalyst of the present invention is contained in the catalyst layer of the anode. Also, the conductive base material is not particularly limited, and examples thereof include nickel, a nickel alloy, nickel iron, vanadium, molybdenum, copper, silver, manganese, a platinum group element, graphite, and chromium, or a combination thereof.

As the cathode, any cathode that can be used in an electrolytic cell for alkaline water electrolysis can be used without particular limitation. The cathode can include a conductive base material and a catalyst layer covering a surface of the base material. The catalyst layer is not particularly limited, and examples thereof can include a noble metal oxide, nickel, cobalt, molybdenum, manganese, oxides or noble metal oxides thereof, and the like. Also, the conductive base material is not particularly limited, and examples thereof include nickel, a nickel alloy, stainless steel, mild steel, a nickel alloy, and stainless steel, or mild steel with a nickel-plated surface.

As the diaphragm for alkaline electrolysis, a diaphragm that can be used in an electrolytic cell for alkaline water electrolysis can be used without particular limitation. The diaphragm is not particularly limited, and examples thereof include porous diaphragms such as a porous membrane made of asbestos or modified asbestos, a porous diaphragm using a polysulfone-based polymer, a cloth using polyphenylene sulfide fibers, a fluorine-based porous membrane, and a porous diaphragm using a hybrid material containing both an inorganic material and an organic material, and an ion exchange membrane such as fluorine-based ion exchange membrane.

Alkaline water as an electrolytic solution used for water electrolysis preferably has a pH of 10 or more from a viewpoint of electrolysis efficiency. Examples of the alkaline water include potassium hydroxide aqueous solution and sodium hydroxide aqueous solution.

### [Solid polymer type water electrolysis (PEM electrolysis)]

A solid polymer type water electrolysis system can have, for example, two electrodes on both sides of a solid polymer electrolyte membrane.

In one embodiment, an anode of the solid polymer type water electrolysis system can include a conductive base material and a catalyst layer covering a surface of the base material. Preferably, the catalyst of the present invention is included in the catalyst layer of the anode.

The cathode can include a conductive base material and a catalyst layer covering a surface of the base material. The catalyst layer preferably has a high hydrogen evolution ability, and can use nickel, cobalt, iron, a platinum group element, or the like. Also, the conductive base material is not particularly limited, and examples thereof include nickel, a nickel alloy, stainless steel, mild steel, a nickel alloy, stainless steel, and the like.

Water electrolysis can be performed using a solid polymer ion exchange membrane as an electrolytic membrane. The electrolyte membrane is not limited as long as an effect of the present invention can be obtained, and a fluorine-based sulfonic acid ion exchange membrane is exemplified.

### [Examples]

The present invention will be described in more detail below using examples and comparative examples, but the scope of the present invention is not limited to the examples.

### [Preparation of catalyst]

### (Example 1)

Cellulose nanofibers (CNF) derived from sea squirt shells as the biomass-derived cellulose nanofibers and a dry matter of blood waste (BM) having the FeN₄ structure as the dry matter containing proteins or amino acids were mixed in a ratio by weight of 1:10, and calcined at 900°C in a nitrogen atmosphere to prepare a calcined product. The obtained calcined product was used as a catalyst of example 1.

### (Example 2)

Cellulose nanofibers derived from sea squirt shells as the biomass-derived cellulose nanofibers and a dry matter of blood waste having the FeN₄ structure as the dry matter containing proteins or amino acids were mixed in a ratio by weight of 1:5, and calcined at 900°C in a nitrogen atmosphere to prepare a calcined product. The obtained calcined product was used as a catalyst of example 2.

### (Example 3)

Cellulose nanofibers derived from sea squirt shells as the biomass-derived cellulose nanofibers and a dry matter of blood waste having the FeN₄ structure as the dry matter containing proteins or amino acids were mixed in a ratio by weight of 1:2, and calcined at 900°C in a nitrogen atmosphere to prepare a calcined product. The obtained calcined product was used as a catalyst of example 3.

### (Comparative example 1)

Only cellulose nanofibers derived from sea squirt shells were calcined at 900°C in a nitrogen atmosphere to prepare a calcined product. The obtained calcined product was used as a catalyst of comparative example 1.

### [Fabrication of electrode]

### (Electrode of example 1)

2 mg of the catalyst of example 1 and 1 mg of Milli-Q water were kneaded with an ultrasonic agitator to be applied to a glassy carbon electrode, and furthermore, 5 µL of 0.5% by mass of a Nafion aqueous solution was applied to the glassy carbon electrode to obtain an electrode of example 1.

### (Electrode of example 2)

An electrode of example 2 was obtained in the same manner as the electrode of example 1 except that the catalyst of example 2 was used instead of the catalyst of example 1.

### (Electrode of example 3)

An electrode of example 3 was obtained in the same manner as the electrode of example 1 except that the catalyst of example 3 was used instead of the catalyst of example 1.

### (Electrode of comparative example 1)

An electrode of comparative example 1 was obtained in the same manner as the electrode of example 1 except that the catalyst of comparative example 1 was used instead of the catalyst of example 1.

### (Electrode of comparative example 2)

An electrode of comparative example 2 was obtained in the same manner as the electrode of example 1 except that Pt/C was used instead of the catalyst of example 1.

### (LSV measurement)

A linear sweep voltammetry (LSV) curve was acquired using an oxygen-saturated 0.1 M potassium hydroxide aqueous solution as an electrolytic solution with a rotating ring disk electrode (RRDE-3A manufactured by BAS Corporation) under a condition of a sweep rate of 5 mV/s. A rotation speed of the rotating disk was set to 1600 rpm, a Pt wire was used as a counter electrode, and Ag/AgCl was used as a reference electrode. The LSV measurement by RRDE was performed with the rotating ring disk electrode (RRDE-3A manufactured by BAS Corporation) using an oxygen-saturated 0.1 M potassium hydroxide aqueous solution as an electrolytic solution under a condition of a sweep rate of 5 mV/s. The LSV was measured for each case of the rotation speeds of the rotating disk at 0 rpm, 400 rpm, 800 rpm, 1200 rpm, 1600 rpm, 2000 rpm, and 2400 rpm. Pt was used as the counter electrode and Ag/AgCl was used as the reference electrode.

### (Onset potential)

In the LSV curve, a potential at which generation of a current starts (a potential at an intersection obtained by extrapolating a portion in which an oxidation/reduction current increases rapidly and deriving an intersection with a residual current in a voltammogram) is defined as an onset potential, an onset potential of the oxygen evolution reaction is expressed as E_{on-set/OER}, and an onset potential of the oxygen reduction reaction is expressed as E_{on-set/ORR}.

### (Half-wave potential)

In the LSV curve of the oxygen reduction reaction, a potential corresponding to a current value of half of a limiting current value was defined as a half-wave potential in the oxygen reduction reaction. The half-wave potential of the oxygen reduction reaction was expressed as E_{half(ORR)}.

### (Comparison of oxygen evolution catalytic performance)

Using the electrodes of examples 1 to 3 and the electrodes of comparative examples 1 and 2, the onset potential E_{on-set/OER} of the oxygen evolution reaction was measured. Results are each shown in Table 1.

**[Table 1]**

| Table. 1 Comparison of oxygen evolution (OER) catalytic performance | | | | | |
|---|---|---|---|---|---|
| | | Proportion of CNF | Proportion of BM | Thermal decomposition temperature | E_{on-set/OER} |
| | | | | | [V vs. RHE] |
| Example 1 | CNF:BM = 1:10 | 9.0% | 91.0% | 900°C | 1.39 |
| Example 2 | CNF:BM = 1:5 | 16.7% | 83.3% | 900°C | 1.35 |
| Example 3 | CNF:BM = 1:2 | 33.3% | 66.7% | 900°C | 1.40 |
| Comparative example 1 | CNF:BM = 10:0 | 100.0% | 0.0% | 900°C | 1.54 |
| Comparative example 2 | Pt/C | - | - | - | 1.40 |

As shown in Table 1, it was ascertained that the electrodes of examples 1 to 3 using the catalyst containing the calcined product of the mixture including the biomass-derived cellulose nanofibers and the dry matter containing proteins or amino acids had a lower onset potential than the electrode of comparative example 1 using the catalyst containing the calcined product of only the cellulose nanofibers, and had an excellent oxygen evolution catalytic ability. Also, it was ascertained that the electrodes of examples 1 and 2 had an oxygen evolution catalytic ability superior to that of the Pt/C electrode, and the electrode of example 3 had an oxygen evolution catalytic ability comparable to that of the Pt/C electrode.

### (Comparison of oxygen reduction catalytic performance)

Using the electrodes of examples 1 to 3 and the electrode of comparative example 1, the onset potential E_{on-set/ORR} and the half-wave potential E_{half(ORR)} of the oxygen reduction reaction were measured. Results are each shown in Table 2.

**[Table 2]**

| Table. 2 Comparison of oxygen reduction (ORR) catalytic performance | | | | | | |
|---|---|---|---|---|---|---|
| | | Proportion of CNF | Proportion of BM | Thermal decompositi on temperature | E_{on-set/ORR} | E_{half}(ORR) |
| | | | | | [V vs. RHE] | [V vs. RHE] |
| Example 1 | CNF:BM = 1:10 | 9.0% | 91.0% | 900°C | 1.011 | 0.821 |
| Example 2 | CNF:BM = 1:5 | 16.7% | 83.3% | 900°C | 0.988 | 0.839 |
| Example 3 | CNF:BM = 1:2 | 33.3% | 66.7% | 900°C | 0.988 | 0.829 |
| Comparative example 1 | CNF:BM = 10:0 | 100.0% | 0.0% | 900°C | 0.922 | 0.780 |

As shown in Table 2, it was ascertained that the electrodes of examples 1 to 3 using the catalyst containing the calcined product of the mixture including the biomass-derived cellulose nanofibers and the dry matter containing proteins or amino acids had a higher onset potential and half-wave potential than the electrode of comparative example 1 using the catalyst containing the calcined product of only the cellulose nanofibers, and had excellent oxygen reduction catalytic ability.

Next, a mixture in which a cobalt complex is further contained in addition to the biomass-derived cellulose nanofibers and the dry matter containing proteins or amino acids was calcined, and the catalyst containing the obtained calcined product was subjected to an electrochemical performance evaluation.

### [Preparation of catalyst]

### (Example 4)

Cellulose nanofibers (CNF) derived from sea squirt shells as the biomass-derived cellulose nanofibers, a dry matter of blood waste (BM) having the FeN₄ structure as the dry matter containing proteins or amino acids, and vitamin B₁₂ (VB12) as the cobalt complex were mixed in a ratio by weight of 1:9:1, and purified water was added to prepare a dispersion liquid. Next, the dispersion liquid was dried little by little on a hot plate maintained at 60°C, and then calcined at 900°C in a nitrogen atmosphere to obtain a calcined product. The obtained calcined product was used as a catalyst of example 4.

### (Example 5)

A calcined product was obtained in the same manner as in example 4 except that cellulose nanofibers derived from sea squirt shells as the biomass-derived cellulose nanofibers, a dry matter of blood waste having the FeN₄ structure as the dry matter containing proteins or amino acids, and vitamin B₁₂ as the cobalt complex were mixed in a ratio by weight of 1:9:0. The obtained calcined product was used as a catalyst of example 5.

### [Preparation of electrode]

### (Electrode of example 4)

2 mg of the catalyst of example 4 and 1 mg of Milli-Q water were kneaded with an ultrasonic agitator to be applied to a glassy carbon electrode, and furthermore, 5 µL of 0.5% by mass of a Nafion aqueous solution was applied to the glassy carbon electrode to obtain an electrode of example 4.

### (Electrode of example 5)

An electrode of example 5 was obtained in the same manner as the electrode of example 4 except that the catalyst of example 5 was used instead of the catalyst of example 4.

### (Electrode of comparative example 2)

An electrode of comparative example 2 was obtained in the same manner as the electrode of example 4 except that Pt/C was used instead of the catalyst of example 4.

### (Electrode of comparative example 3)

An electrode of comparative example 3 was obtained in the same manner as the electrode of example 4 except that GC was used instead of the catalyst of example 4.

### (LSV measurement by RRDE)

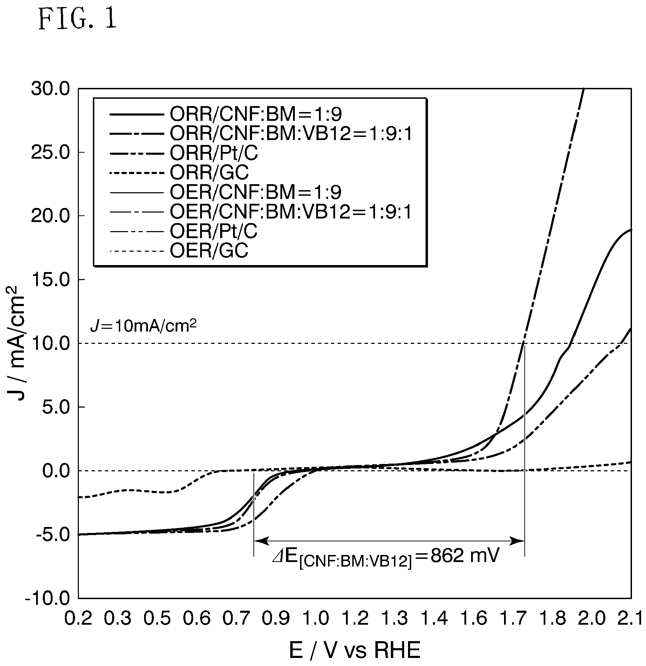

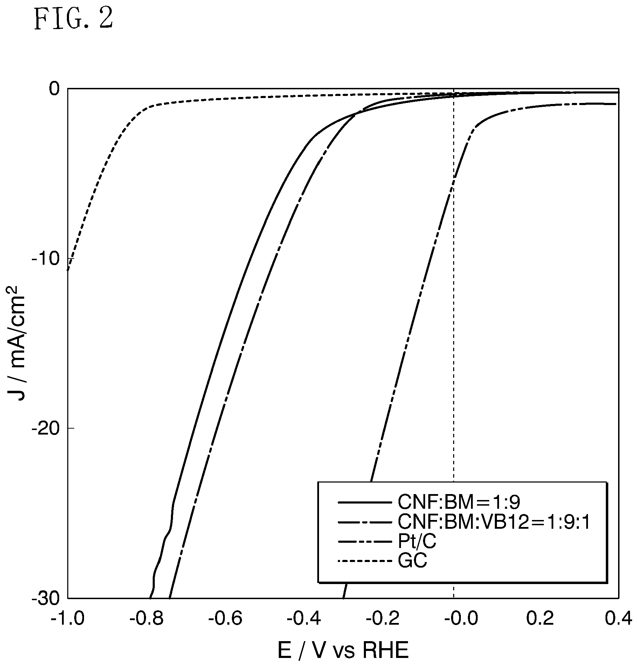

An LSV curve was acquired using an oxygen-saturated 0.1 M potassium hydroxide aqueous solution as an electrolytic solution with a rotating ring disk electrode (RRDE-3A manufactured by BAS Corporation) under the following conditions.
Rotation speed of rotating disk: 1600 rpm
Voltage range: 0.2 to 2.0 [V vs NHE]
Results of the LSV measurement are shown in FIGS. 1 and 2.

As shown in FIG. 1, it was ascertained that the electrode of example 4 using the catalyst containing the calcined product of the mixture including the biomass-derived cellulose nanofibers, the dry matter containing proteins or amino acids, and the cobalt complex had a superior oxygen evolution catalytic ability compared to the electrode of example 5 using the catalyst containing the calcined product obtained without adding a cobalt complex.

Also, as shown in FIG. 1, it was ascertained that the electrode of example 4 using the catalyst containing the calcined product of the mixture including the biomass-derived cellulose nanofibers, the dry matter containing proteins or amino acids, and the cobalt complex was excellent in both the oxygen reduction catalytic performance and the oxygen evolution catalytic performance.

Further, as shown in FIG. 1, it was ascertained that the electrode of example 4 using the catalyst containing the calcined product of the mixture including the biomass-derived cellulose nanofibers, the dry matter containing proteins or amino acids, and the cobalt complex exhibited performance equal to or greater than that of the Pt/C electrode (comparative example 2) in terms of a difference between an oxygen reduction reaction potential and an oxygen evolution reaction potential.

As shown in FIG. 2, it was ascertained that the electrode of example 4 using the catalyst containing the calcined product of the mixture including the biomass-derived cellulose nanofibers, the dry matter containing proteins or amino acids, and the cobalt complex had a superior hydrogen evolution catalytic ability compared to the electrode of example 5 using the catalyst containing the calcined product obtained without adding a cobalt complex.

### (I-V characteristics evaluation)

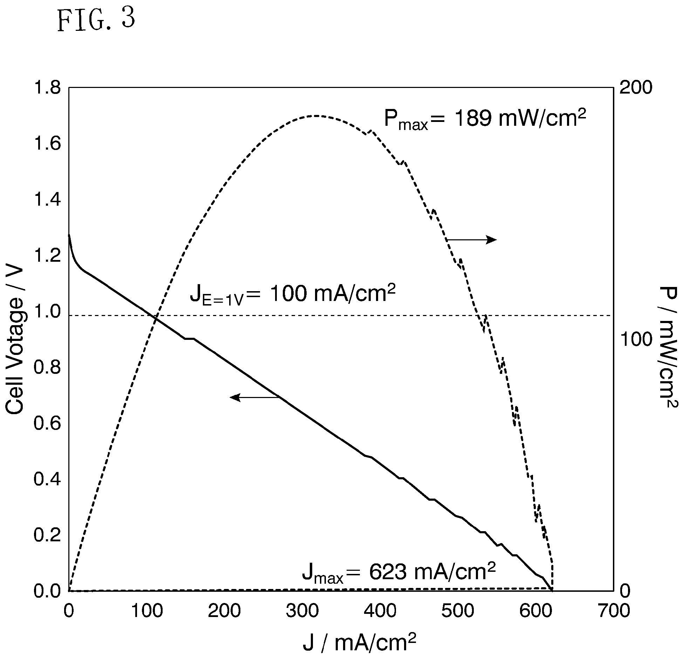

An air-zinc battery was fabricated using the catalyst of example 4 containing the calcined product of the mixture including the biomass-derived cellulose nanofibers, the dry matter containing proteins or amino acids, and the cobalt complex as a positive electrode catalyst of the air-zinc battery, and I-V characteristics were evaluated. Results of the I-V characteristics evaluation are shown in FIG. 3.

As shown in FIG. 3, a maximum power density of 189 mW/cm² was obtained in a battery in which the catalyst of example 4 containing the calcined product of the mixture including the biomass-derived cellulose nanofibers, the dry matter containing proteins or amino acids, and the cobalt complex was used as a positive electrode catalyst. Therefore, it was ascertained that a high-performance battery with a high power density could be obtained when a catalyst containing a calcined product of a mixture including biomass-derived cellulose nanofibers, a dry matter containing proteins or amino acids, and a cobalt complex was used.

### (Example 6)

A calcined product was obtained in the same manner as in example 4 except that cellulose nanofibers derived from wakame, which is a seaweed, as the biomass-derived cellulose nanofibers, a dry matter of blood waste having the FeN₄ structure as the dry matter containing proteins or amino acids, and vitamin B₁₂ as the cobalt complex were mixed in a ratio by weight of 1:9:0. The obtained calcined product was used as a catalyst of example 6. As a result, it was ascertained that the onset potential E_{on-set/OER} of the oxygen evolution catalyst was 1.40 V vs RHE, and the onset potential E_{on-set/ORR} of the oxygen reduction reaction catalyst was 0.965 V vs RHE, indicating that the catalyst had an excellent oxygen evolution catalytic ability and oxygen reduction catalytic ability.

### [Industrial Applicability]

The catalyst of the present invention is useful with excellent catalytic performance when it is used as a catalyst for promoting oxygen evolution reactions and oxygen reduction reactions in a positive electrode of a metal-air secondary battery or a water electrolysis system. Also, the catalyst of the present invention can also have excellent catalytic performance when it is used as a catalyst for promoting hydrogen evolution reactions. Also, since the catalyst of the present invention does not use platinum, iridium, and ruthenium, manufacturing costs can be reduced and manufacturing processes suitable for mass production can be designed. Further, since the catalyst of the present invention uses biomass-derived cellulose nanofibers, it can greatly contribute to waste recycling and resource circulation.

## Claims

1. A catalyst comprising a calcined product of a mixture including biomass-derived cellulose nanofibers and a dry matter containing proteins or amino acids.

2. The catalyst according to claim 1, wherein the cellulose nanofibers are derived from marine biomass.

3. The catalyst according to claim 1, wherein the cellulose nanofibers are derived from sea squirt shells or seaweed.

4. The catalyst according to claim 1, wherein the dry matter containing proteins or amino acids is a dry matter of blood waste having a FeN₄ structure.

5. The catalyst according to claim 1, containing 0.1 to 30% by mass of iron with respect to a total mass of the catalyst.

6. The catalyst according to claim 1, containing 0.1 to 40% by mass of phosphorus with respect to a total mass of the catalyst.

7. The catalyst according to claim 1, wherein a mass ratio of the dry matter containing proteins or amino acids and the cellulose nanofibers included in the mixture is 1:1 to 20:1.

8. The catalyst according to claim 1, wherein the mixture further includes a cobalt

9. The catalyst according to claim 8, wherein the cobalt complex is vitamin B₁₂s.

10. The catalyst according to claim 9, wherein the vitamin B₁₂s are derived from biomass.

11. The catalyst according to claim 9, wherein the vitamin B₁₂s are derived from laver and/or oysters.

12. The catalyst according to claim 8, containing 0.1 to 30% by mass of cobalt with respect to a total mass of the catalyst.

13. The catalyst according to claim 8, wherein a mass ratio of the cellulose nanofibers, the dry matter containing proteins or amino acids, and the cobalt complex included in the mixture is 1: 1 to 20:0.1 to 10.

14. The catalyst according to claim 1 for oxygen evolution, oxygen reduction, or hydrogen evolution.

15. A manufacturing method, which is a manufacturing method of a catalyst containing a calcined product of a mixture including biomass-derived cellulose nanofibers and a dry matter containing proteins or amino acids, the manufacturing method comprising:
a step of preparing and calcining the mixture including the dry matter containing proteins or amino acids and the cellulose nanofibers.

16. The manufacturing method according to claim 15, wherein the mixture further includes a cobalt complex.

17. The manufacturing method according to claim 15, comprising a step of extracting the cellulose nanofibers from biomass.

18. The manufacturing method according to claim 15, comprising a step of obtaining the dry matter containing proteins or amino acids by concentrating and drying blood waste.

19. The manufacturing method according to claim 15, wherein the cellulose nanofibers are derived from marine biomass.

20. The manufacturing method according to claim 15, wherein the cellulose nanofibers are derived from sea squirt shells or seaweed.

21. The manufacturing method according to claim 16, wherein the cobalt complex is vitamin B₁₂s.

22. The manufacturing method according to claim 21, wherein the vitamin B₁₂s are derived from biomass.

23. The manufacturing method according to claim 21, wherein the vitamin B₁₂s are derived from laver and/or oysters.

24. An electrode for a metal-air secondary battery or a water electrolysis system comprising the catalyst according to any one of claims 1 to 14.

25. A metal-air secondary battery or a water electrolysis system comprising the electrode according to claim 24.
